# EUROPEAN PATENT SPECIFICATION

(11) **EP 0 645 936 B1**
(45) Date of publication and mention of the grant of the patent: **26.03.2008**
(21) Application number: 94306985.6
(22) Date of filing: 23.09.1994
(51) Int. Cl.: H04N 11/16, H04N 9/64

(54) **Video signal processing**
Videosignalverarbeitung
Traitement de signaux vidéo

(30) Priority: 24.09.1993 GB 9319726
(43) Date of publication of application: 29.03.1995
(73) Proprietor: Snell & Wilcox Limited, Havant, Hampshire PO9 2PE (GB)
(72) Inventor: Steinberg, Avigdor, Petersfield, Hampshire GU32 3LS (GB); Flannaghan, Barry, Winchester SO23 7EB (GB)
(74) Representative: Garratt, Peter Douglas

(56) References cited:
- EP-A- 0 150 963
- DE-A- 3 931 903
- GB-A- 2 169 772

## Description

This invention relates to video signal processing and is especially concerned with the decoding of PAL colour television signals.

In the PAL standard, the red colour difference signal has opposite polarity on alternate lines and the simple PAL decoder incorporates a compensating reversal. If the signal contains a colour phase error, the error will appear with opposite polarity on alternate lines at the colour demodulator outputs. In areas of constant colour, these alternating errors produce artifacts known as Hanover bars and it is the purpose of the well-known Delay PAL decoding technique to eliminate Hanover bars by averaging the colour difference signal over two or more lines. It will be recognised that this technique necessarily reduces vertical resolution in the colour difference signals. Accordingly, there is a softening of horizontal chrominance edges.

It is an object of the present invention to provide improved video signal processing that enables Hanover bars to be suppressed or eliminated with a much reduced loss of chrominance resolution.

Accordingly, the present invention consists, in one aspect, in a method for suppressing Hanover bars in PAL demodulated colour difference signals, comprising the steps of vertical filtering a colour difference signal with a pass band cnetered on the vertical frequency of Hanover bats; non-linearly processing the filtered signal for passing the filtered signal at amplitudes beneath a pre-determined threshold and for attenuating the filtered signal at amplitudes above said pre-determined threshold; subtracting the non-linearly processed signal from the colour difference signal.

In another aspect, the present invention consists in a method for suppressing Hanover bars in PAL demodulated colour difference signals, comprising the steps of, for each of the two colour difference signals, vertical filtering a colour difference signal with a pass band centered on the vertical frequency of Hanover bars; non-linearly processing the filtered signal for passing the filtered signal when the other colour difference signal is beneath a pre-determined threshold and for attenuating the filtered signal when the other colour difference signal is above said pre-determined threshold; subtracting the non-linearly processed signal from the colour difference signal.

Advantageously, the filtered signal is passed with unity gain for amplitudes up to one quarter of the peak amplitude of the colour difference signal and is attenuated at amplitudes above said threshold.

In another aspect, the present invention consists in video signal processing means for suppressing Hanover bars in PAL demodulated colour difference signals, comprising a vertical filter (12, 14, 16) adapted to receive a colour difference signal and having a pass band centred on the vertical frequency of Hanover bars; non-linear means (20) for passing the filtered signal at amplitudes beneath a pre-determined threshold and attenuating the filtered signal at amplitudes above said pre-determined threshold and means (18) for subtracting the output of the non-linear means from the colour difference signal.

In yet a further aspect the present invention consists in video signal processing means for suppressing Hanover bars in PAL demodulated colour difference signals, comprising, for each of two colour difference signals, a vertical filter (12, 14, 16) adapted to receive a colour difference signal and having a pass band centred on the vertical frequency of Hanover bars; non-linear means (20) for passing the filtered signal when the other colour difference signal is beneath a pre-determined threshold and attenuating the filtered signal when the other colour difference signal is above said pre-determined threshold and means (18) for subtracting the output of the non-linear means from the colour difference signal.

The present invention recognises that an amplitude can be determined above which colour difference signals having the Hanover bar frequency of 156 cycles per picture height are unlikely to have arisen from phase errors and should optimally be interpreted as chrominance detail.

The present invention will now be described by way of example with reference to the accompanying drawings in which:-
Figure 1 is a block diagram of video signal processing means according to the present invention;
Figure 2 illustrates the characteristic of a non-linear device included within Figure 1; and
Figure 3 is a block diagram of video signal processing means according to a further embodiment of the present invention.

It has been mentioned that the delay PAL decoding technique eliminates Hanover bars by averaging colour difference signals over two or more lines. It will be recognised that averaging over two lines introduces a vertical displacement of the colour difference signal of half a field line and it is difficult to compensate for this vertical displacement in the luminance path. Accordingly, professional decoders combine undelayed, one line delayed and two line delayed colour difference signals to provide the required vertical filtering with a resulting delay of one field line rather than one half of a field

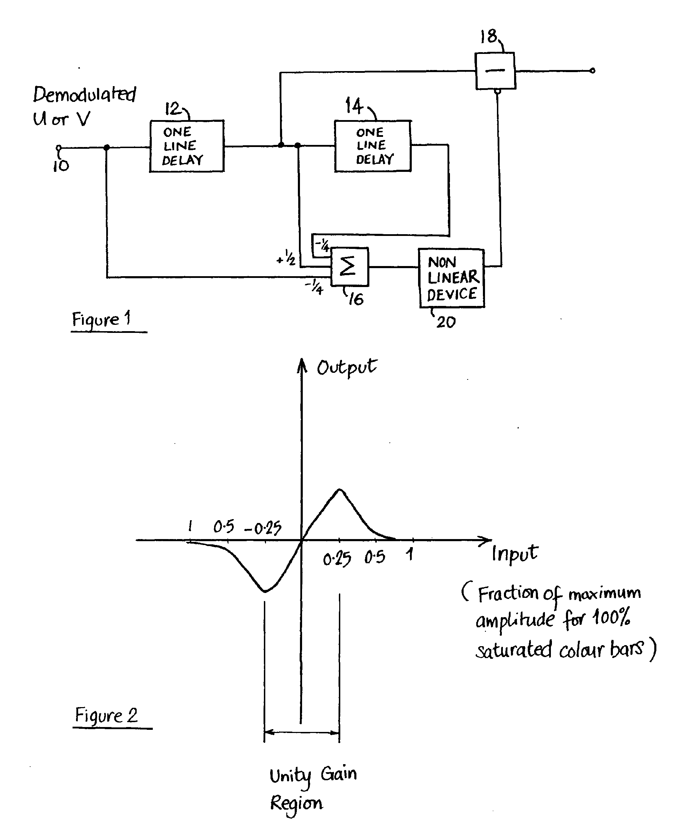

Turning to Figure 1, a colour difference signal, which may be demodulated U or demodulated V, is received at the input terminal 10 of an FIR filter having one line delays 12 and 14 and an adder 16. The undelayed, one line delayed and two line delayed signals are combined with respective coefficients -¼ +½ -¼ to produce an output signal centred on the Hanover bar frequency of 156 cycles per picture height. Before being subtracted from the centre tap signal in subtractor 18, this "Hanover bar" signal is passed through a non-linear device 20 having the characteristic shown in Figure 2.

The plot of Figure 2 shows the output characteristic for the non-linear device 20 over a range of inputs expressed as a fraction of maximum amplitude for 100% saturated colour bars. It will be seen that over a region corresponding to amplitudes up to one quarter of peak amplitude, the device 20 has unity gain. It is to be expected that signals arising from typical colour phase errors will fall within this range and will accordingly be completely suppressed within subtractor 18. At amplitudes above one half peak amplitude, the device 20 has essentially zero gain. It is expected that signals of this amplitude will always derive from real chrominance detail and there is accordingly no suppression within subtractor 18. In the intermediate band of amplitudes between one quarter and one half peak amplitude, device 20 has essentially an inverse characteristic and there is accordingly attenuation of the signal in the subtractor 18.

A decoder having processing means according to the present invention will produce an output that shows no Hanover bars in plain coloured areas and which, for large differences, has no appreciable loss of vertical colour resolution.

It has been recognised by the present inventors that, viewing Hanover bars as a consequence of cross-talk between the U and V chrominance components, a further improvement can be achieved by varying the threshold of Hanover bar suppression in one component, in dependence upon the amplitude at the Hanover bar frequency in the other component.

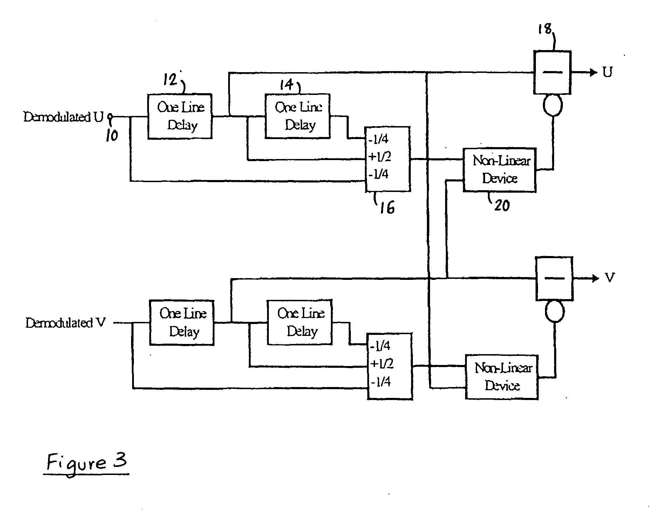

Turning to Figure 3, there is illustrated an embodiment of the invention operating in this manner. Generally speaking, this embodiment consists of a circuit as shown in Figure 1, for each of the two colour difference signals. The components are represented with the same reference numerals employed in Figure 1 and apart from the connections to the non-linear device, no further description is necessary here.

According to this aspect of the invention, each non-linear device receives two inputs; one input is the filtered "Hanover" bar information for the component (U or V) concerned, the other input is the once delayed, unfiltered signal for the other component. Thus, the gain applied to the filtered "Hanover" bar information will depend upon the amplitude of the other component. A characteristic similar to that shown in Figure 2, will still be employed but the size of the unity gain region in, say, the U component, will be proportional to the magnitude of the V component.

It will be understood that this invention has been described by way of example only and a wide variety of modifications can be made without departing from the scope of the claims. The value of 156 cycles per picture height will usually be appropriate but will be replaced by the appropriate value in systems such as PAL M. The non-linear device, whether a look-up table, a voltage controlled amplifier or other alternative, represents a simple way of suppressing components in the filtered signal with reference to a threshold, whether that threshold is in the filtered signal or in the unfiltered signal in the other colour difference channel. Alternative will, however, occur to the skilled man. Similarly, whilst reference has been made to one line delays, other odd multiples of lines can be employed; the most useful alternatives being 313 and 625.

## Claims

1. A method for suppressing Hanover bars in PAL demodulated colour difference signals, comprising the steps of vertical filtering a colour difference signal with a pass band centered on the vertical frequency of Hanover bars;
non-linearly processing the filtered signal for passing the filtered signal at amplitudes beneath a pre-determined threshold and for attenuating the filtered signal at amplitudes above said pre-determined threshold;
subtracting the non-linearly processed signal from the colour difference signal.

2. A method for suppressing Hanover bars in PAL demodulated colour difference signals, comprising the steps of, for each of the two colour difference signals,
vertical filtering a colour difference signal with a pass band centered on the vertical frequency of Hanover bars;
non-linearly processing the filtered signal for passing the filtered signal when the other colour difference signal is beneath a pre-determined threshold and for attenuating the filtered signal when the other colour difference signal is above said pre-determined threshold;
subtracting the non-linearly processed signal from the colour difference signal.

3. A method according to Claim 1 to Claim 2, wherein the filtered signal is passed with unity gain for amplitudes up to one quarter of the peak amplitude of the colour difference signal and is attenuated at amplitudes above said threshold.

4. Video signal processing means for suppressing Hanover bars in PAL demodulated colour difference signals, comprising a vertical filter (12, 14, 16) adapted to receive a colour difference signal and having a pass band centred on the vertical frequency of Hanover bars; non-linear means (20) for passing the filtered signal at amplitudes beneath a pre-determined threshold and attenuating the filtered signal at amplitudes above said pre-determined threshold and means (18) for subtracting the output of the non-linear means from the colour difference signal.

5. Video signal processing means for suppressing Hanover bars in PAL demodulated colour difference signals, comprising, for each of two colour difference signals, a vertical filter (12, 14, 16) adapted to receive a colour difference signal and having a pass band centred on the vertical frequency of Hanover bars; non-linear means (20) for passing the filtered signal when the other colour difference signal is beneath a pre-determined threshold and attenuating the filtered signal when the other colour difference signal is above said pre-determined threshold and means (18) for subtracting the output of the non-linear means from the colour difference signal.

6. Video signal processing means according to Claim 4 or Claim 5, wherein the vertical filter has a pass band centred on 156 cycles per picture height.

## Patentansprüche

1. Verfahren zur Unterdrückung von Jalousieeffekten bzw. PAL-Jalousie-Effekten in demodulierten PAL-Farbdifferenzsignalen, umfassend die folgenden Schritte:
vertikales Filtern eines Farbdifferenzsignals mit einem Durchlassbereich, der auf die Mitte der vertikalen Frequenz der Jalousieeffekte bzw. PAL-Jalousie-Effekte eingestellt ist;
nichtlineares Verarbeiten des gefilterten Signals zum Durchlassen des gefilterten Signals mit Amplituden unterhalb eines vorbestimmten Schwellenwertes und zum Abschwächen des gefilterten Signals mit Amplituden oberhalb des vorbestimmten Schwellenwertes;
Subtrahieren des nichtlinear verarbeiteten Signals von dem Farbdifferenzsignal.

2. Verfahren zur Unterdrückung von Jalousieeffekten bzw. PAL-Jalousie-Effekten in demodulierten PAL-Farbdifferenzsignalen, das für jedes der zwei Farbdifferenzsignale die folgenden Schritte umfasst:
vertikales Filtern eines Farbdifferenzsignals mit einem Durchlassbereich, der auf die Mitte der vertikalen Frequenz der Jalousieeffekte bzw. PAL-Jalousie-Effekte eingestellt ist;
nichtlineares Verarbeiten des gefilterten Signals zum Durchlassen des gefilterten Signals, wenn das andere Farbdifferenzsignal unterhalb eines vorbestimmten Schwellenwertes liegt, und zum Abschwächen des gefilterten Signals, wenn das andere Farbdifferenzsignal oberhalb des vorbestimmten Schwellenwerts liegt;
Subtrahieren des nichtlinear verarbeiteten Signals von dem Farbdifferenzsignal.

3. Verfahren nach Anspruch 1 bis 2, wobei das gefilterte Signal mit dem Verstärkungsfaktor Eins bei Amplituden mit bis zu einem Viertel der Spitzenamplitude des Farbdifferenzsignals durchgelassen und bei Amplituden über dem Schwellenwert abgeschwächt wird.

4. Videosignalverarbeitungseinrichtung zur Unterdrückung von Jalousieeffekten bzw. PAL-Jalousie-Effekten in demodulierten PAL-Farbdifferenzsignalen, die einen vertikalen Filter (12, 14, 16) umfasst, der angepasst ist, um ein Farbdifferenzsignal zu empfangen, und einen Durchlassbereich aufweist, der auf die Mitte der vertikalen Frequenz der Jalousieeffekte bzw. PAL-Jalousie-Effekte eingestellt ist; eine nichtlineare Einrichtung (20) zum Durchlassen des gefilterten Signals bei Amplituden unterhalb eines vorbestimmten Schwellenwertes und zum Abschwächen des gefilterten Signals bei Amplituden oberhalb des vorbestimmten Schwellenwertes und eine Einrichtung (18) zum Subtrahieren der Ausgabe der nichtlinearen Einrichtung von dem Farbdifferenzsignal.

5. Videosignalverarbeitungseinrichtung zur Unterdrückung von Jalousieeffekten bzw. PAL-Jalousie-Effekten in demodulierten PAL-Farbdifferenzsignalen, die für jedes der zwei Farbdifferenzsignale einen vertikalen Filter (12, 14, 16) umfasst, der angepasst ist, um ein Farbdifferenzsignal zu empfangen, und einen Durchlassbereich aufweist, der auf die Mitte der vertikalen Frequenz der Jalousieeffekte bzw. PAL-Jalousie-Effekte eingestellt ist; eine nichtlineare Einrichtung (20) zum Durchlassen des gefilterten Signals, wenn das andere Farbdifferenzsignal unterhalb eines vorbestimmten Schwellenwertes liegt, und zum Abschwächen des gefilterten Signals, wenn das andere Farbdifferenzsignal oberhalb des vorbestimmten Schwellenwertes liegt, und eine Einrichtung (18) zum Subtrahieren der Ausgabe der nichtlinearen Einrichtung von dem Farbdifferenzsignal.

6. Videosignalverarbeitungseinrichtung nach Anspruch 4 oder 5, wobei der vertikale Filter einen Durchlassbereich aufweist, der auf 156 Zyklen pro Bildhöhe eingestellt ist.

## Revendications

1. Procédé pour supprimer les barres de Hanovre dans des signaux de différence de couleur démodulés PAL, comprenant les étapes consistant à filtrer verticalement un signal de différence de couleur avec un passe-bande centré sur la fréquence verticale des barres de Hanovre ;
traiter de façon non linéaire le signal filtré pour faire passer le signal filtré à des amplitudes au-dessous d'un seuil prédéterminé et pour atténuer le signal filtré à des amplitudes au-dessus dudit seuil prédéterminé ;
soustraire le signal traité non linéairement du signal de différence de couleur.

2. Procédé pour supprimer les barres de Hanovre dans des signaux de différence de couleur démodulés PAL, comprenant les étapes consistant, pour chacun des deux signaux de différence de couleur,
à filtrer verticalement un signal de différence de couleur avec un passe-bande centré sur la fréquence verticale des barres de Hanovre ;
à traiter de façon non linéaire le signal filtré pour faire passer le signal filtré lorsque l'autre signal de différence de couleur est au-dessous d'un seuil prédéterminé pour atténuer le signal filtré lorsque l'autre signal de différence de couleur se situe au-dessus dudit seuil prédéterminé ;
à soustraite le signal traité non linéairement du signal de différence de couleur.

3. Procédé selon la revendication 1 ou la revendication 2, dans lequel le signal filtré est passé avec un gain d'unité pour des amplitudes jusqu'à un quart de l'amplitude de pic du signal de différence de couleur et est atténué à des amplitudes au-dessus dudit seuil.

4. Moyen de traitement de signal vidéo pour supprimer les barres de Hanovre dans les signaux de différence de couleur démodulés PAL, comprenant un filtre vertical (12, 14, 16) apte à recevoir un signal de différence de couleur et ayant un passe-bande centré sur la fréquence verticale des barres de Hanovre ; des moyens non linéaires (20) pour faire passer le signal filtré à des amplitudes au-dessous d'un seuil prédéterminé et atténuer le signal filtré à des amplitudes au-dessus dudit seuil prédéterminé et des moyens (18) pour soustraire la sortie des moyens non linéaires depuis le signal de différence de couleur.

5. Moyen de traitement de signal vidéo pour supprimer les barres de Hanovre dans les signaux de différence de couleur démodulés PAL, comprenant, pour chacun des deux signaux de différence de couleur, un filtre vertical (12, 14, 16) apte à recevoir un signal de différence de couleur et ayant un passe-bande centré sur la fréquence verticale des barres de Hanovre ; des moyens non linéaires (20) pour faire passer le signal filtré lorsque l'autre signal de différence de couleur se situe au-dessous d'un seuil prédéterminé et atténuer le signal filtré lorsque l'autre signal de différence de couleur se situe au-dessus dudit seuil prédéterminé et des moyens (18) pour soustraire la sortie de moyens non linéaires du signal de différence de couleur.

6. Moyen de traitement de signal vidéo selon la revendication 4 ou la revendication 5, dans lequel le filtre vertical comporte un passe-bande centré sur 156 cycles par hauteur d'image.
